# EUROPEAN PATENT APPLICATION

(11) **EP 4 002 037 A1**
(43) Date of publication of application: **25.05.2022**
(21) Application number: 21207239.1
(22) Date of filing: 09.11.2021
(51) Int. Cl.: G05B 19/418, B29C 64/386, G06Q 10/08

(54) **INFORMATION PROCESSING SYSTEM, INFORMATION PROCESSING APPARTUS, METHOD FOR PROCESSING INFORMATION, AND CARRIER MEANS**

(30) Priority: 11.11.2020 JP 2020188305
(71) Applicant: Ricoh Company, Ltd., Tokyo 143-8555 (JP)
(72) Inventor: Jin, Tomohiro, Tokyo, 143-8555 (JP)
(74) Representative: SSM Sandmair

(57) **Abstract**

An information processing system (100) includes a fabricating apparatus (130) and a prediction unit (311). The prediction unit (311) predicts an amount of a fabrication material to be used based on a use history of the fabrication material and a use plan of the fabricating apparatus (130). The prediction unit (311) determines whether a prediction target period is a busy period or a non-busy period based on the use history of the fabrication material, to predict the amount of the fabrication material to be used.

## Description

### BACKGROUND

### Technical Field

Embodiments of the present disclosure relate to an information processing system, an information processing apparatus, a method for processing information, and carrier means.

### Description of the Related Art

There have been developed fabricating apparatuses (so-called "3D printers", hereinafter, simply referred to as "fabricating apparatus") that fabricate a three-dimensional object based on input data. As methods of performing three-dimensional fabrication, there have been various methods proposed, for example, fused filament fabrication (FFF), selective laser sintering (SLS), material jetting (MJ), electron beam melting (EBM), and stereolithography employing stereolithography apparatus (SLA).

With the spread of fabricating apparatuses, there is an increasing need to predict the shortage of consumables such as fabrication materials in a fabricating apparatus.

For example, Japanese Patent No. 2968791 is known as a technology for predicting and notifying replacement timing of consumables.

However, Japanese Patent No. 2968791 relates to consumables of an image forming apparatus and do not relate to a fabricating apparatus. For this reason, the prediction accuracy of the shortage of fabrication materials in fabricating apparatuses has not been sufficient.

### SUMMARY

In light of the above-described problem, the purpose of the present disclosure is to provide an information processing system, an information processing apparatus, a method for processing information, and carrier means that enhance the accuracy of predicting the shortage of fabrication materials in fabricating apparatuses.

In an aspect of the present disclosure, an information processing system includes a fabricating apparatus and a prediction device. The prediction device predicts an amount of a fabrication material to be used based on a use history of the fabrication material and a use plan of the fabricating apparatus. The prediction device determines whether a prediction target period is a busy period or a non-busy period based on the use history of the fabrication material, to predict the amount of the fabrication material to be used.

In another aspect of the present disclosure, an information processing apparatus includes a fabrication apparatus and a prediction device. The prediction device predicts an amount of a fabrication material to be used based on a use history of the fabrication material and a use plan of a fabricating apparatus. The prediction device determines whether a prediction target period is a busy period or a non-busy period based on the use history of the fabricating material, to predict the amount of the fabrication material to be used.

In still another aspect of the present disclosure, a prediction method includes predicting and determining. Predicting predicts an amount of a fabrication material to be used, based on a use history of the fabrication material and a use plan of a fabricating apparatus. Determining determines whether a prediction target period is a busy period or non-busy period based on the use history. Predicting predicts the amount of the fabrication material to be used, based on a determination of whether the prediction target period is the busy period or the non-busy period in the determining.

In still another aspect of the present disclosure, there is provided carrier means carrying computer readable code for controlling an information processing apparatus, which is connected to the fabricating apparatus, to carry out the prediction method.

According to the present disclosure, an information processing system, an information processing apparatus, a method for processing information, and carrier means that enhance the accuracy of predicting the shortage of fabrication materials in fabricating apparatuses, can be provided.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
FIG. 1 is a diagram illustrating a schematic configuration of hardware of an entire information processing system, according to an embodiment of the present disclosure;
FIGS. 2A and 2B are diagrams illustrating a configuration of hardware included in apparatuses constituting an information processing system, according to an embodiment of the present disclosure;
FIG. 3 is a block diagram of software included in an information processing system, according to an embodiment of the present disclosure;
FIG. 4 is a diagram illustrating a use plan of three-dimensional fabricating apparatuses, stored in a storage unit of an information processing system, according to an embodiment of the present disclosure;
FIG. 5 is a diagram illustrating a control table of remaining amount of a fabrication material, stored in a storage unit of an information processing system, according to an embodiment of the present disclosure;
FIG. 6 is a graph illustrating an example of a past use history of a fabricating apparatus, stored in a storage unit of an information processing system, according to an embodiment of the present disclosure;
FIG. 7 is a flowchart of a process of predicting the shortage of fabrication material, executed by a server, according to an embodiment of the present disclosure;
FIGS. 8A and 8B are diagrams illustrating prediction and correction of a use amount of fabrication material, according to an embodiment of the present disclosure;
FIG. 9A is a table indicating examples of weighting coefficients used to calculate correction amounts of fabrication material in accordance with whether a prediction target period is a busy period or non-busy period, according to an embodiment of the present disclosure; and
FIG. 9B is a table indicating variations of weighting coefficients used to calculate correction amounts of fabrication material as an example, according to an embodiment of the present disclosure.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the embodiments are described with technical limitations with reference to the attached drawings, such description is not intended to limit the scope of the disclosure and all of the components or elements described in the embodiments of this disclosure are not necessarily indispensable.

Referring now to the drawings, embodiments of the present disclosure are described below. In the drawings for explaining the following embodiments, the same reference codes are allocated to elements (members or components) having the same function or shape and redundant descriptions thereof are omitted below.

Although the present disclosure is hereinafter described with reference to some embodiments, the embodiments of the present disclosure are not limited to embodiments described below. In the drawings referred below, the same reference codes are used for the common elements, and the descriptions thereof are omitted as appropriate.

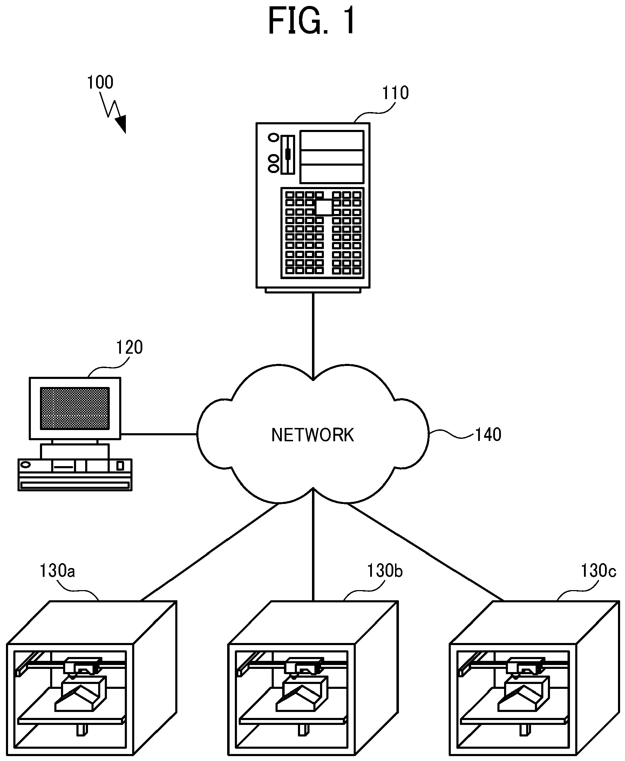

FIG. 1 is a diagram illustrating a schematic configuration of hardware of an entire information processing system 100 according to an embodiment of the present disclosure. The information processing system 100 illustrated in FIG. 1 is an information processing system that performs three-dimensional fabrication processing. As an example, the information processing system 100 may be a system managed by a company that provides a three-dimensional fabrication service. FIG. 1 illustrates a configuration example in which a server 110 as an information processing apparatus, a terminal 120, and a plurality of fabricating apparatuses 130 are connected to each other via a network 140 such as the Internet or a local area network (LAN). Note that the number of servers 110, the number of terminals 120, and the number of fabricating apparatuses 130 are not limited to those illustrated in FIG. 1, and the number of servers 110, the number of terminals 120, and the number of fabricating apparatuses 130 included in the information processing system 100 are not limited to any particular numbers. In addition, each of the apparatuses of the information processing system 100 may be connected to the network 140 via a wired or wireless network.

The server 110, as the information processing apparatus, controls the information processing system 100 according to the present embodiment. The server 110 according to the present embodiment predicts the use amount of fabrication material (hereinafter simply referred to as "material"), and notifies each of the apparatuses of the information processing system 100 of the shortage of fabrication material when the amount of fabrication material is insufficient. The server 110 may include a plurality of information processing apparatuses in order to balance processing load. In addition, the server 110 may be mounted on the fabricating apparatus 130 or the terminal 120 as needed.

The terminal 120 is an information processing apparatus that performs various operations related to the three-dimensional fabrication processing in the information processing system 100 according to the present embodiment. The terminal 120 according to the present embodiment can create a use plan of the fabricating apparatuses 130 and display a prediction result of the use amount of fabrication material. The server 110 and the terminal 120 may be different apparatuses or may be a single apparatus. The terminal 120 may be mounted on the fabricating apparatus 130 as needed.

The fabricating apparatus 130 is an apparatus that fabricates three-dimensional objects in desired shapes using various fabrication methods. The methods of performing three-dimensional fabrication include, for example, fused filament fabrication, selective laser sintering, material jetting, electron beam melting, and stereolithography employing stereolithography apparatus. However, the methods of performing three-dimensional fabrication according to embodiments of the present disclosure are not limited to the above-described specific methods and any methods may be employed. Note that the fabricating apparatus 130 according to the present embodiment may use one type of fabrication material or two or more types of fabrication materials. Further, the types of fabrication material are not limited to specific types of fabrication materials, and any fabrication material in accordance with the fabrication method can be adopted, and the fabrication material may be, for example, a solid fabrication material, a liquid fabrication material, a powder fabrication material, or a mixture thereof.

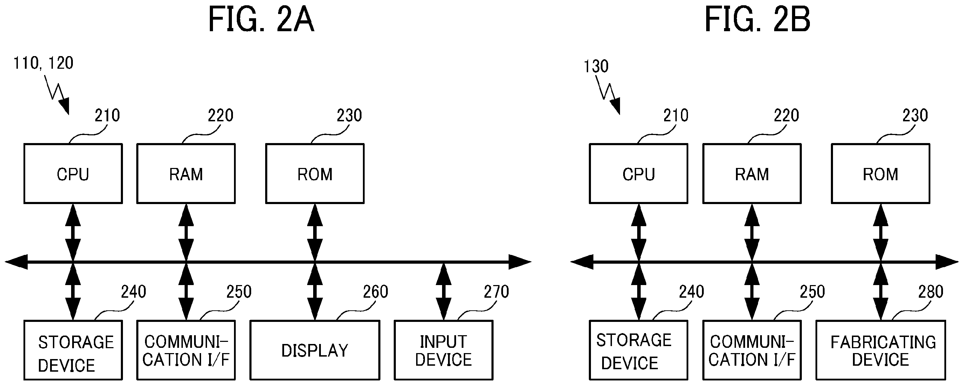

Next, a hardware configuration of each of the apparatuses of the information processing system 100 is described. FIGS. 2A and 2B are diagrams illustrating a configuration of hardware included in the apparatuses constituting the information processing system 100, according to the present embodiment. FIG. 2A illustrates a hardware configuration of the server 110 and the terminal 120. FIG. 2B illustrates a hardware configuration of the fabricating apparatus 130.

First, FIG. 2A is described. The server 110 and the terminal 120 of the present embodiment include a central processing unit (CPU) 210, a random access memory (RAM) 220, a read only memory (ROM) 230, a storage device 240, a communication interface (I/F) 250, a display 260, and an input device 270. These devices are connected to each other via a bus.

The CPU 210 is a device that executes a program for controlling the operation of the server 110 or the terminal 120 and performs predetermined processing. The RAM 220 is a volatile storage device for providing an execution space for a program to be executed by the CPU 210, and is used for storing and developing programs and data. The ROM 230 is a non-volatile storage device for storing programs and firmware executed by the CPU 210.

The storage device 240 is a readable and writable non-volatile storage device that stores, for example, an operating system (OS), various applications, setting information, and various data for causing the server 110 or the terminal 120 to function. Examples of the storage device 240 include a hard disk drive (HDD) and a solid state drive (SSD).

The communication I/F 250 connects the server 110 or the terminal 120 to the network 140, and allows the server 110 or the terminal 120 to communicate with other devices via the network 140. Communication via the network 140 may be either wired communication or wireless communication, and various data can be transmitted and received using a predetermined communication protocol such as transmission control protocol/internet protocol (TCP/IP).

The display 260 is a device that displays, for example, various data, the state of the server 110 or the terminal 120 to the user. The display 260 may be, for example, a liquid crystal display (LCD). The input device 270 is a device for a user to operate the server 110 or the terminal 120. Examples of the input device 270 include a keyboard and a mouse. Note that the display 260 and the input device 270 may be separate devices or a device such as a touch panel display having both functions of the display 260 and the input device 270. Note that the server 110 may not include the display 260 and the input device 270.

Next, FIG. 2B is described. The fabricating apparatus 130 according to the present embodiment includes a CPU 210, a RAM 220, a ROM 230, a storage device 240, a communication I/F 250, and a fabricating device 280. Each of the hardware components (the CPU 210, the RAM 220, the ROM 230, the storage device 240, the communication I/F 250, and the fabricating device 280) are connected to each other via a bus. Note that the CPU 210, the RAM 220, and the ROM 230, the storage device 240, and the communication I/F 250 of the fabricating apparatus 130 are the same as those described with reference to FIG. 2A. Thus, detailed description thereof will be omitted.

The fabricating device 280 is a device that fabricates a three-dimensional object based on fabrication data. The fabricating device 280 is configured in accordance with various fabrication methods. For example, the fabricating device 280 in the FFF method includes a heating mechanism that melts a fabrication material and a nozzle that discharges the fabrication material. Alternatively, for example, the fabricating device 280 using the SLS method includes a laser light source. Further, the fabricating device 280 of the present embodiment includes, for example, a sensor that detects the remaining amount of fabrication material.

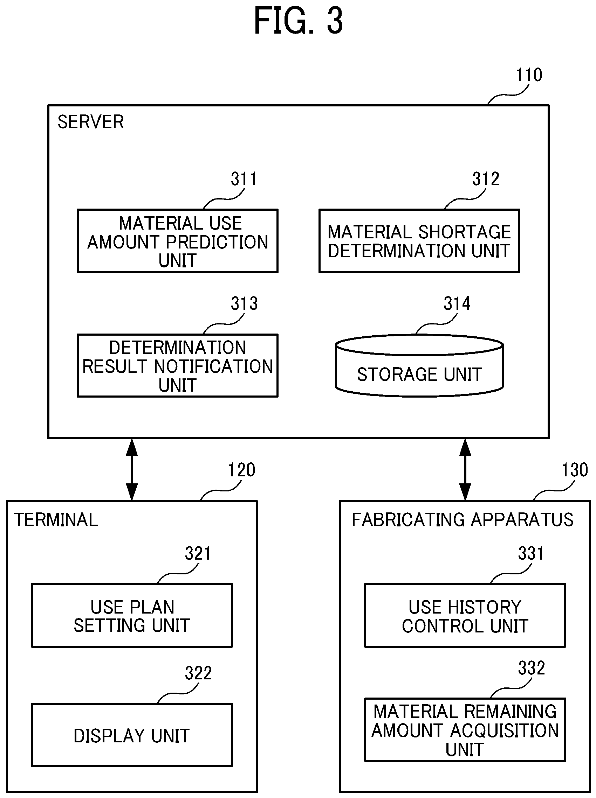

The hardware configuration included in each of the apparatuses of the present embodiment has been described above. Next, functional units executed by the hardware according to the present embodiment are described with reference to FIG. 3. FIG. 3 is a block diagram of software provided for the information processing system 100, according to the present embodiment.

As illustrated in FIG. 3, the server 110 includes functional units such as a fabrication material use amount prediction unit 311 as a prediction unit, a material shortage determination unit 312 as a determination unit, a determination result notification unit 313 as a notification unit, and a storage unit 314. Further, the terminal 120 includes functional units such as a use plan setting unit 321 and a display unit 322. In addition, the fabricating apparatus 130 includes functional units such as a use history control unit 331 and a material remaining amount acquisition unit 332.

First, the functional units included in the server 110 are described. The material use amount prediction unit 311 is a prediction unit that predicts the use amount of fabrication material to be used in the future based on the use history of fabrication material and the use plan of the fabricating apparatus 130. The material use amount prediction unit 311 according to the present embodiment can predict the use amount of fabrication material in consideration of whether the fabricating apparatus 130 is used in a busy period or a non-busy period.

The material shortage determination unit 312 compares the use amount recorded in the use history of fabrication material with the amount of fabrication material held by each of the fabricating apparatuses 130 to determine whether the shortage of fabrication material occurs. In addition, the material shortage determination unit 312 can calculate the timing at which the shortage of fabrication material may occur and the shortage amount of fabrication material.

The determination result notification unit 313 is a unit that notifies the terminal 120 of the timing at which the shortage of fabrication material may occur and the shortage amount of fabrication material when the fabrication material held by the fabricating apparatus 130 is insufficient based on the determination result by the material shortage determination unit 312.

The storage unit 314 controls the storage device 240 to write and read various data. The storage unit 314 of the present embodiment can store, for example, the use plan of the fabricating apparatus 130 created by the terminal 120. Further, the storage unit 314 can store, for example, the remaining amount of fabrication material held by each of the fabricating apparatuses 130 included in the information processing system 100, the past use history of each of the fabricating apparatuses 130.

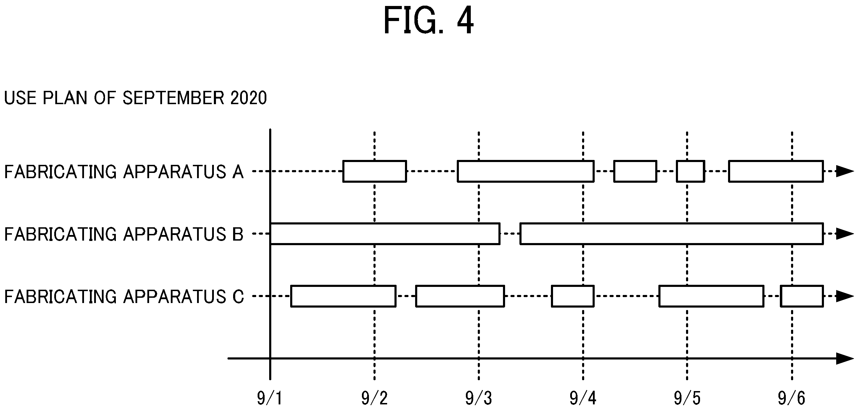

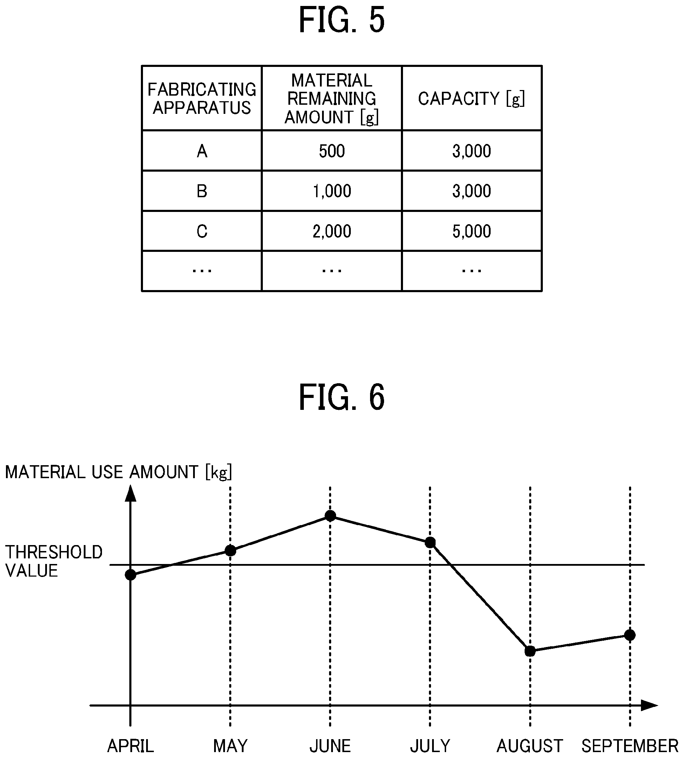

In the present embodiment, various data stored in the storage unit 314 of the present embodiment is described with reference to FIGS. 4, 5, and 6. FIG. 4 is a diagram illustrating use plans of the three-dimensional fabricating apparatuses 130, stored in the storage unit 314, according to the present embodiment. FIG. 5 is a diagram illustrating a control table of remaining amount of fabrication material, stored in the storage unit 314 of the information processing system 100, according to the present embodiment. FIG. 6 is a graph illustrating an example of a past use history of the fabricating apparatus 130, stored in the storage unit 314, according to the present embodiment.

First, a description is given with reference to FIG. 4. As illustrated in FIG. 4, the use plans of the fabricating apparatuses 130 included in the information processing system 100 are stored in the storage unit 314. In the example of FIG. 4, the use plans are illustrated in the form of a Gantt chart. However, embodiments are not particularly limited to the Gantt chart, and the use plans stored in the storage unit 314 may be in any form. In FIG. 4, as an example, the use plans of September 2020 are illustrated for the three fabricating apparatuses 130 (A, B, and C). Note that the use plans illustrated in FIG. 4 only indicate time periods during which the fabricating apparatuses 130 are used. However, other information related to the use plans may be included in the use plans. For example, shapes, dimensions, volumes of three-dimensional objects to be fabricated may be included in the use plans.

Next, a description is given with reference to FIG. 5. As illustrated in FIG. 5, the storage unit 314 stores a table (hereinafter, referred to as a "material control table") for controlling a storage amount of fabrication material (hereinafter, referred to as a "remaining amount of material") stored by each of the fabricating apparatuses 130 included in the information processing system 100. In the material control table illustrated in FIG. 5, information for identifying the fabricating apparatuses 130, the remaining amount of material of each of the fabricating apparatuses 130, and the maximum amount of fabrication material that can be stored in each of the fabricating apparatuses 130 are stored in the material control table in association with each other. The storage unit 314 receives information on the remaining amount of material from each of the fabricating apparatuses 130 at arbitrary timings to update the material control table.

Next, a description is given with reference to FIG. 6. As illustrated in FIG. 6, the storage unit 314 stores a past use amount of material of the fabricating apparatus 130 included in the information processing system 100 as the use history. In FIG. 6, a graph of monthly use amount of material is illustrated as an example. In FIG. 6, the horizontal axis indicates months. However, embodiments are not particularly limited to such a time span, and the time span in which the use amount of material is totaled may be arbitrary. In the present embodiment, the period in which the use amount of material exceeds a predetermined threshold value can be set as a busy period, and the period in which the use amount of material does not exceed the predetermined threshold value can be set as a non-busy period. In the example of FIG. 6, May, June, and July are busy periods, and April, August, and September are non-busy periods. Note that the time span of the use history is not particularly limited to any time span. However, in consideration of determining a busy period or a non-busy period, the use history for the last one year can be stored in the storage unit 314, as an example.

In addition, when one fabricating apparatus 130 includes a plurality of types of fabrication materials, the use history of each of the fabrication materials may be stored in the storage unit 314. In such a case, the use history of each of the fabrication materials may include an identifier for identifying the fabrication materials.

Referring back to FIG. 3, the description is continued. Next, functional units included in the terminal 120 are described. The use plan setting unit 321 sets the use plans for using the fabricating apparatuses 130. The use plan setting unit 321 sets a use plan illustrated in FIG. 4 for each of the fabricating apparatuses 130 and stores the use plans in the storage unit 314 of the server 110. The display unit 322 controls the display 260 of the terminal 120 and displays a determination result notified from the determination result notification unit 313.

Next, the fabricating apparatus 130 is described. The use history control unit 331 is a unit that controls the use history of the fabricating apparatus 130. For example, the use history control unit 331 updates the use history of the fabricating apparatus 130 at a timing at which the fabricating processing is completed. In addition, the use history control unit 331 can control the amount of fabrication material used together with the use history of the fabricating apparatus 130. The material remaining amount acquisition unit 332 is a unit that acquires the remaining amount of material via, for example, a sensor, which is provided for the fabricating device 280, for detecting the remaining amount of material. The use history controlled by the use history control unit 331 and the remaining amount of material acquired by the material remaining amount acquisition unit 332 are transmitted to the server 110 and stored in the storage unit 314 as described in FIGS. 5 and 6.

Note that each of the software blocks described above corresponds to each of the functional units implemented by the CPU 210 executing programs according to the present embodiment to function each of the hardware devices. All the functional units illustrated in each of the embodiments of the present disclosure may be implemented in software or may be implemented as hardware that provides a part or all of the equivalent functions.

Furthermore, all of the functional units described above may not be included in a configuration illustrated in FIG. 3. For example, in another embodiment, each functional unit may be realized by cooperation between the server 110 and the terminal 120.

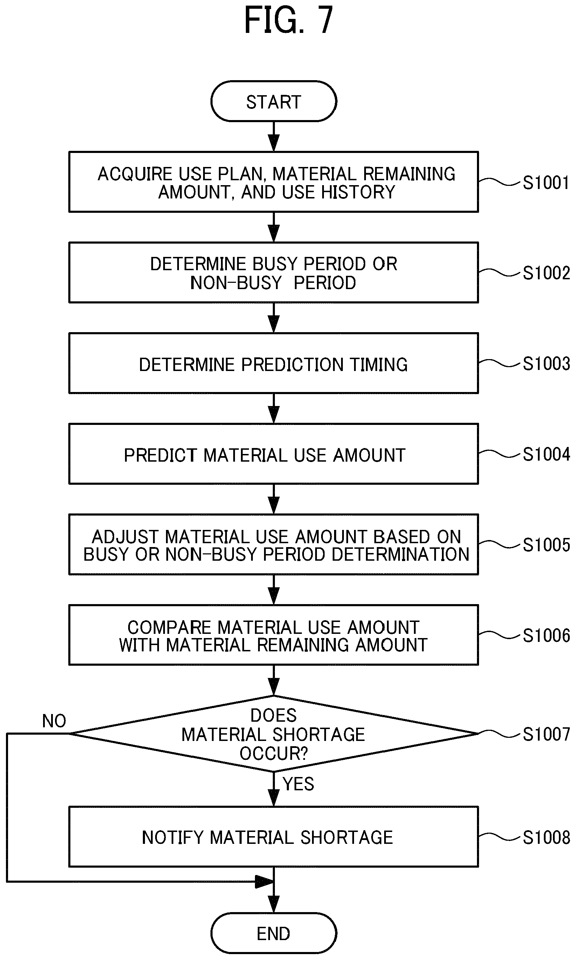

Next, processing executed by each of the functional units illustrated in FIG. 3 is described. FIG. 7 is a flowchart of a process of predicting shortage of fabrication material, executed by the server 110, according to the present embodiment. The server 110 of the present embodiment starts the process from step S1001. Note that each processing described below is mainly performed by the material use amount prediction unit 311, the material shortage determination unit 312, and the determination result notification unit 313 of the server 110. However, embodiments are not particularly limited to such a configuration.

In step S1001, the material use amount prediction unit 311 acquires a use plan set by the terminal 120, the remaining amount of material in the fabricating apparatus 130, and the use history of the fabricating apparatus 130. Note that the acquisition of various types of information in step S1001 is not limited to a method of directly acquiring information from the terminal 120 or the fabricating apparatus 130 and may be a method of acquiring information from each apparatus in advance and reading out the information stored in the storage unit 314.

Next, in step S1002, the material use amount prediction unit 311 determines whether a prediction target period is a busy period or a non-busy period based on an acquired use history of the fabricating apparatus 130. As described in FIG. 6, the determination of the busy period or the non-busy period can be made based on, for example, whether the monthly use amount is equal to or greater than the predetermined threshold value. The use amount may be a use amount for a certain period such as a week or several days instead of the monthly use amount.

Thereafter, in step S1003, the material use amount prediction unit 311 determines the timing to predict the use amount of material to detect the shortage of fabrication material. In the determination of the prediction timing, an arbitrary time ahead of the prediction timing is designated. For example, one month ahead of the prediction timing can be designated. At this time, when the busy period is expected after a certain period of time, designation of the busy period may be set earlier to perform, for example, a job to order the materials advance.

In step S1004, the material use amount prediction unit 311 predicts the use amount of material based on the use plan of the prediction target period and the use history of the fabricating apparatus 130. In step S1004, based on the shape of a three-dimensional object to be fabricated included in the use plan, the material use amount prediction unit 311 may calculate the amount of fabrication material to be used when fabricating the shape in advance and predict the use amount of the material. After step S1004, in step S1005, the material use amount prediction unit 311 corrects the predicted use amount of material based on whether the prediction target period is a busy period or a non-busy period.

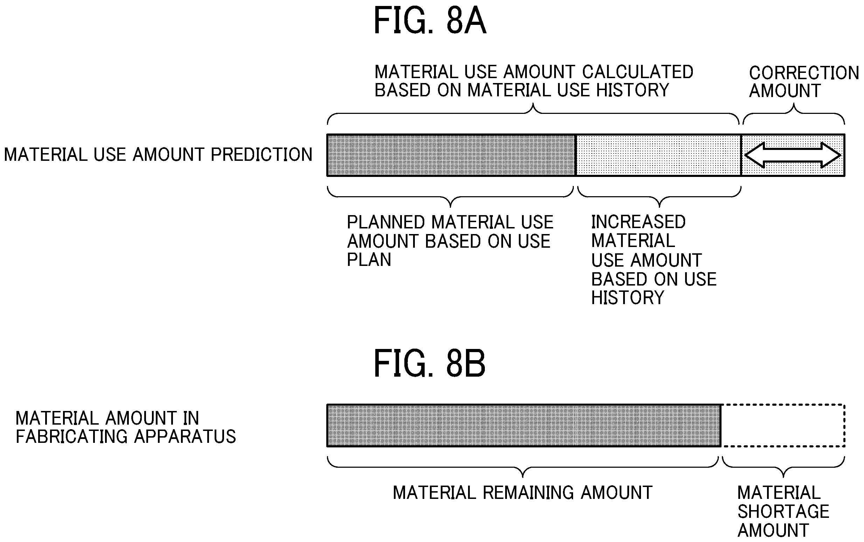

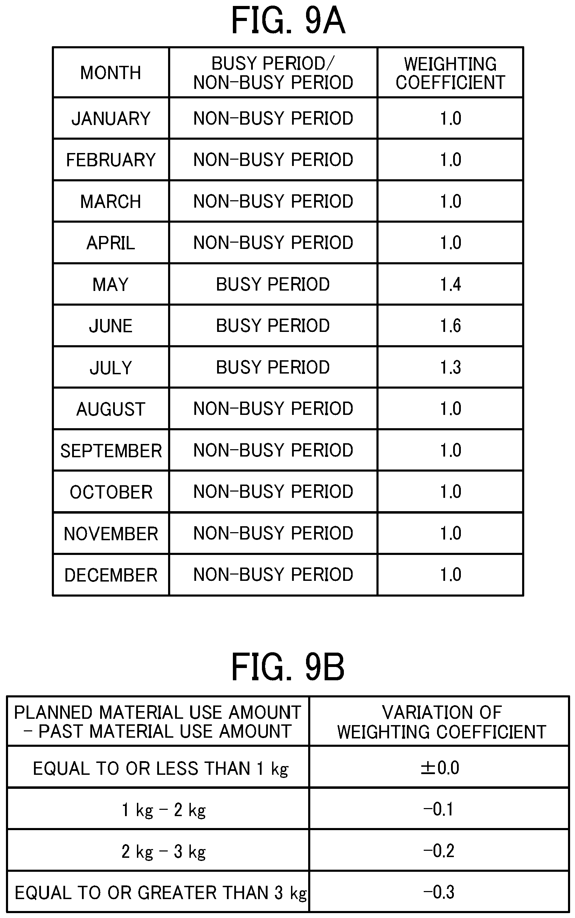

In the present embodiment, the prediction and correction of the use amount of material in steps S1004 and S1005 are described with reference to FIGS. 8A, 8B, 9A and 9B. FIGS. 8A and 8B are diagrams illustrating the prediction and correction of the use amount of material, according to the present embodiment. FIG. 9A is a table indicating weighting coefficients used to calculate correction amounts of material in accordance with whether the prediction target period is a busy period or a non-busy period as an example, according to the present embodiment. FIG. 9B is a table indicating variations of weighting coefficients used to calculate correction amounts of fabrication material as an example, according to the present embodiment.

FIG. 8A illustrates a predicted use amount of material. The predicted use amount of material includes a value calculated based on the use history and a correction amount of material. The value calculated based on the use history includes a planned use amount of material based on the use plan and an increment amount based on the use history. FIG. 8B illustrates the amount of material to be used by the fabricating apparatus 130, and includes, as an example, the remaining amount of material and the shortage amount of material. The correction amount calculated based on the use history is calculated so as to be the sum of the remaining amount of material and the shortage amount of material. Specifically, the material use amount prediction unit 311 adds an increment amount of material based on the use history to the use amount of material based on the use plan to predict the use amount of material. In addition, the material use amount prediction unit 311 further adds the correction amount to calculate the predicted use amount when the prediction target period is a busy period.

For example, as illustrated in FIG. 9A, the correction amount may be set by multiplying the predicted value of a use amount by a weighting coefficient based on whether the prediction target period is a busy period or a non-busy period. For example, if the prediction target period is a non-busy period, the weighting coefficient is 1. Thus, the value calculated based on the use history is used as the predicted use amount as is. In addition, for example, when the prediction target period is a busy period, a value obtained by multiplying a value calculated based on the use history by a weighting coefficient illustrated in FIG. 9A (for example, 1.6 when the prediction target period is June which is a busy period) is set as the predicted use amount.

In addition, set values as indicated in FIG. 9A may not be simply adopted as the weighting coefficients. For example, as indicated in FIG. 9B, the weighting coefficients may be changed based on a difference between a most recent use schedule of material and the use amount of material based on the past use history of material. In the example of FIG. 9B, when the difference between the use amount of material scheduled by the use plan and the use amount of material in the past is equal to or smaller than 1 kg, the correction is performed while the weighting coefficient of FIG. 9A remains as is (plus or minus 0). On the other hand, as the difference between the use amount of material scheduled by the use plan and the use amount of material in the past increases, the correction is performed after the weighting coefficient of FIG. 9A is reduced. As described above, changing the weighting coefficient dynamically and performing the correction allows to perform a more accurate prediction of the use amount of material.

Referring back to FIG. 7, the description is continued. After the use amount of material is corrected in step S1005, in step S1006, the material shortage determination unit 312 compares the predicted and corrected use amount of material with the remaining amount of material held by the fabricating apparatus 130. Then, in step S1007, the material shortage determination unit 312 determines whether the shortage of fabrication material may occur based on the comparison result in step S1006, and branches the processing based on the determination result. For example, as illustrated in FIGS. 8A and 8B, when the predicted use amount of material is greater than the amount of material held by the fabricating apparatus 130, the material shortage determination unit 312 determines that the shortage of fabrication material may occur. In the present embodiment, when the shortage of fabrication material occurs, the material shortage determination unit 312 can also calculate the timing when the shortage of fabrication material may occur and the shortage amount of material.

When it is determined that the shortage of fabrication material may not occur (NO in S1007), the process proceeds to step S1009, and the server 110 ends the process. When it is determined that the shortage of fabrication material may occur (YES in S1007), the process proceeds to step S1008.

In step S1008, the determination result notification unit 313 transmits a notification indicating that the material is insufficient to the terminal 120. In the notification in step S1008, the timing when the material is insufficient and the insufficient amount of material may be transmitted together. Thereafter, in step S1009, the server 110 ends the process. The notification in step S1008 may be transmitted to, for example, the fabricating apparatus 130 other than the terminal 120.

Performing the process illustrated in FIG. 7 allows the server 110 according to the present embodiment to enhance the accuracy of predicting the shortage of fabrication material in the fabricating apparatus 130.

In the embodiment described above, the shortage of fabrication material is determined for each of the fabricating apparatuses 130. However, embodiments are not particularly limited to such a configuration. Accordingly, for example, when the fabricating apparatus 130 holds a plurality of materials, the shortage of fabrication material may be determined for each of the materials.

In the embodiment described above, an example is given in which correction is performed by multiplying the predicted use amount by the weighting coefficient. However, the embodiment is not particularly limited to such a configuration. As an example of a method other than the method of multiplying the predicted use amount by the weighting coefficient, for example, there is a method of adding a predetermined value to the predicted value in a busy period and subtracting another predetermined value from the predicted value in the non-busy period.

According to the present disclosure, an information processing system, an information processing apparatus, a method for processing information, and carrier means that enhance the accuracy of predicting shortage of fabrication material in fabricating apparatuses, can be provided.

Each of the functions of the above-described embodiments of the present disclosure can be implemented by a device-executable program written in, for example, C, C++, C#, and Java (registered trademark). The program according to embodiments of the present disclosure can be stored in a device-readable recording medium to be distributed. Examples of the recording medium include a hard disk drive, a compact disk read only memory (CD-ROM), a magneto-optical disk (MO), a digital versatile disk (DVD), a flexible disk, an electrically erasable programmable read-only memory (EEPROM (registered trademark)), and an erasable programmable read-only memory (EPROM). The program can be transmitted over a network in a form with which another computer can execute the program.

Although the present disclosure has been described above with reference to the embodiments, the present disclosure is not limited to the above-described embodiments. Within the range of embodiments that can be estimated by skilled person, those exhibiting functions and effects of the present disclosure are included in the scope of the present disclosure.

The present disclosure can be implemented in any convenient form, for example using dedicated hardware, or a mixture of dedicated hardware and software. The present disclosure may be implemented as computer software implemented by one or more networked processing apparatuses. The processing apparatuses include any suitably programmed apparatuses such as a general purpose computer, personal digital assistant, mobile telephone (such as a WAP or 3G-compliant phone) and so on. Since the present disclosure can be implemented as software, each and every aspect of the present disclosure thus encompasses computer software implementable on a programmable device. The computer software can be provided to the programmable device using any conventional carrier means (carrier medium). The carrier means includes a transient carrier means such as an electrical, optical, microwave, acoustic or radio frequency signal carrying the computer code. An example of such a transient medium is a TCP/IP signal carrying computer code over an IP network, such as the Internet. The carrier means may also include a storage medium for storing processor readable code such as a floppy disk, hard disk, CD ROM, magnetic tape device or solid state memory device.

## Claims

1. An information processing system (100) comprising:
a fabricating apparatus (300); and
a prediction unit (311) configured to predict an amount of a fabrication material to be used, based on a use history of the fabrication material and a use plan of the fabricating apparatus (130),
wherein the prediction unit (311) is configured to determine whether a prediction target period is a busy period or a non-busy period based on the use history of the fabrication material, to predict the amount of the fabrication material to be used.

2. The information processing system (100) according to claim 1, further comprising:
a determination unit (312) configured to compare a storage amount of the fabrication material held by the fabricating apparatus (130) and a use amount recorded in the use history of the fabrication material to determine whether a shortage of the fabrication material held by the fabricating apparatus (130) will occur; and
a notification unit (313) configured to notify that the shortage of the fabrication material will occur when the determination unit (312) determines that the shortage of the fabrication material held by the fabricating apparatus (130) will occur.

3. The information processing system (100) according to claim 2,
wherein the notification unit (313) is configured to notify a timing at which the shortage of the fabrication material will occur and a shortage amount of fabrication material when the determination unit (312) determines that the shortage of the fabrication material held by the fabricating apparatus (130) will occur.

4. The information processing system (100) according to any one of claims 1 to 3,
wherein the prediction unit (311) is configured to multiply a predicted value of the amount of fabrication material to be used by a weighting coefficient to correct the predicted value of the amount of the fabrication material to be used, and
wherein the weighting coefficient based on whether the prediction target period is the busy period or the non-busy period.

5. The information processing system (100) according to any one of claims 1 to 4,
wherein the use history is a use history of a last one year of the fabrication material in the fabricating apparatus (130).

6. The information processing system (100) according to any one of claims 1 to 5,
wherein the use plan of the fabricating apparatus (130) includes a shape of a three-dimensional object to be fabricated, and
wherein the prediction unit (311) is configured to predict the amount of fabrication material to be used, based on the shape.

7. The information processing system (100) according to any one of claims 1 to 6,
wherein the use history includes an identifier that identifies the fabricating material.

8. An information processing apparatus (110) comprising:
a fabricating apparatus (300); and
a prediction unit (311) configured to predict an amount of a fabrication material to be used based on a use history of the fabrication material and a use plan of the fabricating apparatus (130),
wherein the prediction unit (311) is configured to determine whether a prediction target period is a busy period or a non-busy period based on the use history of the fabrication material, to predict the amount of the fabrication material to be used.

9. A prediction method comprising:
predicting an amount of a fabrication material to be used, based on a use history of the fabrication material and a use plan of a fabricating apparatus (130); and
determining whether a prediction target period is a busy period or a non-busy period based on the use history,
wherein the predicting predicts the amount of the fabrication material to be used, based on a determination of whether the prediction target period is the busy period or the non-busy period in the determining.

10. Carrier means carrying computer readable code for controlling an information processing apparatus (110), which is connected to the fabricating apparatus (130), to carry out the method of claim 9.
